# EUROPEAN PATENT SPECIFICATION

(11) **EP 0 699 381 B1**
(45) Date of publication and mention of the grant of the patent: **04.03.1998**
(21) Application number: 95305338.6
(22) Date of filing: 31.07.1995
(51) Int. Cl.: A01G 13/00

(54) **A tree shelter**
Baumschutzraum
Abri pour arbre

(30) Priority: 31.08.1994 GB 9417578; 10.01.1995 GB 9500397
(43) Date of publication of application: 06.03.1996
(73) Proprietor: DAVID S. SMITH PACKAGING LIMITED, London SW1P 2BX (GB)
(72) Inventor: Haines, Clive Peter, Gloucester, Glouchestersire GL19 3AQ (GB)
(74) Representative: Johnson, Terence Leslie

(56) References cited:
- EP-A- 0 133 019
- WO-A-87/01904
- GB-A- 2 224 421
- US-A- 5 375 368

## Description

The invention relates to a tree shelter and more particularly to a tree shelter having a pocket for the provision of a support member to support the shelter in use.

Many attempts have been made at providing tree and plant shelters which have means by which a supporting member such as a stake may be retained. These range from the simple provision of wire ties to more complex arrangements requiring a number of manufacturing steps and or extra parts to be used. As these items are essentially low-cost high volume products, simplicity and low manufacturing cost are extremely important, and these are sacrificed when the shelter is complicated to manufacture or requires a number of separate components. Examples of prior art shelters suffering variously from these disadvantages can be found in WO-A-8701904 and GB-A-2 224 421.

It is an object of the invention to mitigate problems such as these.

According to the invention there is provided a tree shelter comprising a growing area and a pocket for receiving an elongate support member, the shelter being formed from a substantially flat sheet or blank of material and having spaced hinge or fold lines whereabout the sheet or blank is foldable to form panels defining the growing area and pocket, characterised by one edge of the blank being secured by securing means at an inner surface of one panel and by an edge of the blank opposite thereto being secured by securing means at an outer surface of a second panel, such that two panels overlap and are spaced apart to define the pocket.

This provides a compact construction.

The securing means may comprise adhesive, mechanical securing means, or a fused material of the sheet or blank. All these methods provide a positive securing action.

Alternatively, the securing means may comprise a series of spaced tongues and slots which are interengageable. This also provides a positive securing action.

The sheet or blank may comprise fluted plastic material and the hinge or fold lines may comprise a flattened part of the sheet or blank where the flutes are sealed. This is a relatively simple construction. Yet efficient, particularly where the hinge or fold lines may be formed by friction forming.

The shelter may be collapsible about the hinge or crease lines to be substantially flat, this provides for ease of handling, transport and storage.

The securing means may extend substantially the length of the shelter and may comprise an adhesive strip securing one part of the sheet to another part thereof.

Using the invention it is possible to provide a self-assemblable tree shelter. Tree shelters embodying the invention are hereinafter described by way of example, with reference to the accompanying drawings.
Fig. 1 is a perspective view of one embodiment of tree shelter in accordance with an embodiment of the invention;
Fig. 2 is a plan view of the shelter of Fig. 1.
Fig. 3 is a plan view of a blank for forming a second tree shelter according to the invention.
Fig. 4 is a perspective view of a tree shelter according to the invention, assembled from the blank of Fig. 3; and
Fig. 5 is an enlarged view of part of a hinge or fold line of a tree shelter according to the invention.

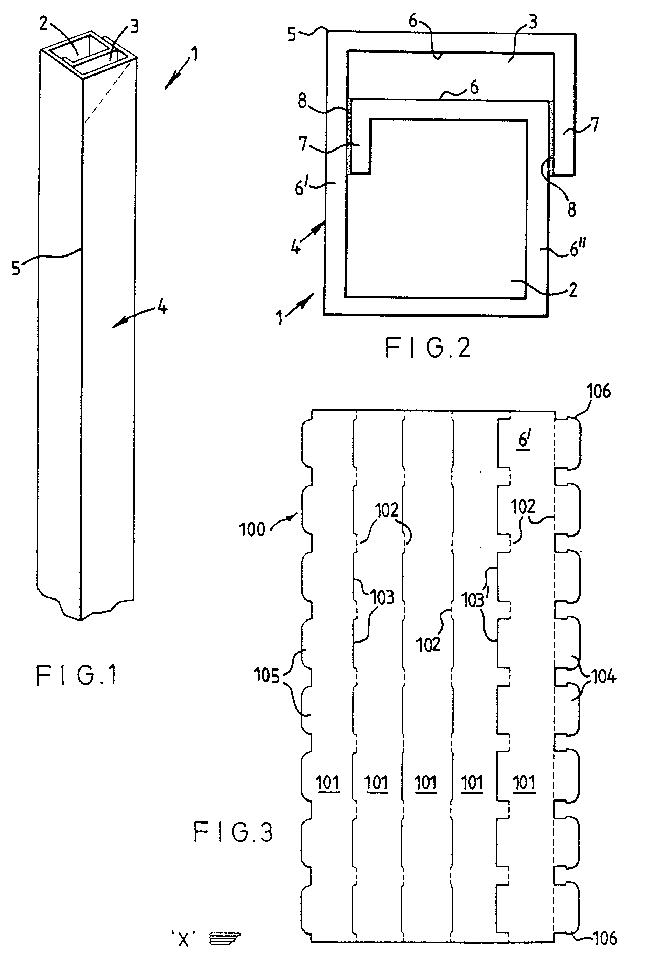

Referring to the drawings there is shown in Figs. 1 and 2 a tree shelter 1 comprising a growing area 2 and a pocket 3 closed internally of the shelter for receiving an elongate support member.

As can be seen from Fig. 2, the shelter 1 is formed from a single sheet or blank 4 of a fluted plastics material such as that sold under the registered trade mark CORREX. The shelter 1 may be formed by conversion of a flat sheet or blank of CORREX, by creasing and folding around hinge or fold lines 5, formed in the sheet or blank.

Where the shelter 1 is formed by conversion, a substantially rectangular sheet or blank of material is first provided with the crease lines 5 running across its width that is with the flute direction being substantially at right angles to the length of the crease lines, as shown at 'X' in Fig. 3. The sheet or blank is then folded about the crease lines such that the ends of the sheet are brought together one end being folded over the other. A gap is left which forms the internal pocket 3, between the overlapping panels or parts 6 of the sheet, the gap being defined by the parts 6 of the sheet or blank being substantially parallel and spaced apart, and being formed by one panel 6' being wider than an opposite facing panel 6'' the difference in width providing the width of the pocket 3.

Each overlapping part 6 is defined by a respective free edge of the sheet or blank and is provided with a tab 7 which is folded to lie parallel with a side of the shelter 1 and secured thereto by a strip of adhesive material 8, or staples. Alternatively, the tabs 7 may be secured by welding the material together. The tabs are parallel and secured to opposite sides or panels of the tree shelter, one tab being secured to the inner surface of one panel and the other being secured to the outer surface of the opposite panel.

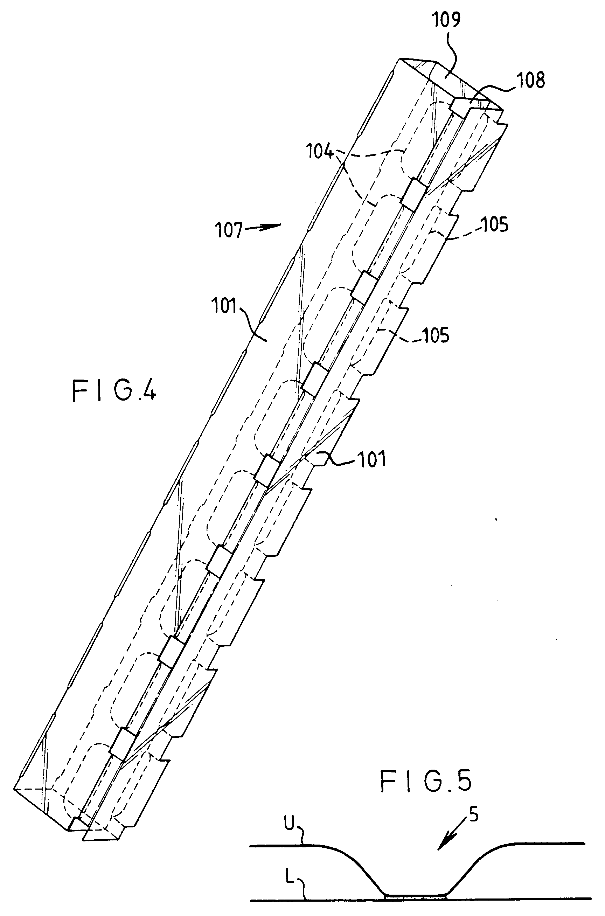

Referring now to Figs. 2 and 4, the blank 100 has a flute direction as shown at 'X', and has fold or crease lines 102 shown in dashed, cut-outs forming slots 103, 103', and tabs 104, 105 at opposite longitudinal edges the slots and tabs being spaced apart along the length of the formed tree shelter. The tabs 104 have interlocking means in the form of lateral shoulders 106 so that the tabs 104 are of generally 'T'-shape.

To assemble the tree shelter 107 (Fig. 4), the various tabs 104, 105 and panels 101 of the blank 100 are folded about respective hinge lines 102 so that the tabs 104 enter the slots 103, the shoulders 106 hooking behind the edges of the slots and thus holding the shelter assembled. The tabs 105 enter slots 103', thereby forming the pocket 108, the growing area being defined at 109.

As in the first embodiment, one panel 6' is wider than opposite panel 6'', to form the pocket 108, the difference in width defining the width of the pocket. In every embodiment, the width of the pocket i.e. the distance between the two major boundary walls, can be varied or designed by varying the difference in width of the panels 6' and 6''.

The shelter may also be formed by directly extruding the material so as to provide the growing area and the pocket, which are separated by an integrally formed part like the part 6.

In every embodiment, the hinge or fold lines 5 (Figs. 1, 2, 5) or 3 (Figs. 3, 4) may be formed by forcing an upper surfaced U of the blank of material towards the lower surface L by a forming tool (not shown) which creates friction thereby softening the material and causing it to flow and collapse and at the same time seal the flutes, the flowed material on setting providing a wide crease or hinge line as shown in Fig. 5.

The wise crease gives a "floppy" effect whereby the formed tree shelter can be readily collapsed when erected, for ease of storage and handling, yet it can easily be erected to a "square" by manipulation to the erected position of say Fig. 2.

Thus, it can be seen that tree shelters made according to the invention are simple and inexpensive to manufacture and assemble whilst being convenient to use. The construction ensures that the supporting element or stake is firmly secured to the shelter, it being necessary to slide it longitudinally from the pocket in order to remove it, thus preventing the support and the shelter from being separated, as is often the case with shelters employing ties and the like. The entry to the pocket 6 or 8 may be cut away as shown in dashed lines in Fig. 1 to facilitate entry of the stake.

## Claims

1. A tree shelter (1), comprising a growing area (2) and a pocket (3) for receiving an elongate support member, the shelter being formed from a substantially fiat sheet or blank (4) of material and having spaced hinge or fold lines (5) whereabout the sheet or blank is foldable to form panels (6) defining the growing area (2) and pocket (3), characterised by one edge of the blank being secured by securing means at an inner surface of one panel and by an edge of the blank opposite thereto being secured by securing means at an outer surface of a second panel, such that two panels overlap and are spaced apart to define the pocket.

2. A tree shelter according to Claim 1, characterised by the securing means comprising adhesive.

3. A tree shelter according to Claim 1, characterised by the securing means comprising mechanical securing means.

4. A tree shelter according to Claim 1, characterised by the securing means comprising a fused material of the sheet or blank.

5. A tree shelter according to Claim 1, characterised by the securing means comprising a series of spaced tongues and slots which are interengageable.

6. A tree shelter according to any preceding Claim, characterised by the sheet or blank comprising fluted plastic material and by the hinge or fold lines comprising a flattened part of the sheet or blank where the flutes are sealed.

7. A tree shelter according to any preceding Claim, the hinge or fold lines being formed by friction forming.

8. A tree shelter according to any preceding Claim, characterised by being collapsible about the hinge or crease lines to be substantially flat.

## Patentansprüche

1. Baumschutz (1), der einen Wachstumsbereich (2) und einen Hohlraum (3) für die Aufnahme eines länglichen Stützelementes aufweist, wobei der Schutz aus einem im wesentlichen flachen Bogen oder Zuschnitt (4) eines Materials gebildet wird und im Abstand angeordnete Scharnier- oder Falzlinien (5) hat, um die der Bogen oder Zuschnitt gefaltet werden kann, um Platten (6) zu bilden, die den Wachstumsbereich (2) und den Hohlraum (3) definieren, dadurch gekennzeichnet, daß eine Kante des Zuschnitts mit Befestigungsmitteln an einer inneren Oberfläche einer Platte befestigt wird und daß eine dieser gegenüberliegende Kante des Zuschnitts mit Befestigungsmitteln an einer äußeren Oberfläche einer zweiten Platte befestigt wird, derartig, daß sich die beiden Platten überdecken und im Abstand zueinander angeordnet sind, um den Hohlraum zu bilden.

2. Baumschutz nach Anspruch 1, dadurch gekennzeichnet, daß die Befestigungsmittel einen Klebstoff umfassen.

3. Baumschutz nach Anspruch 1, dadurch gekennzeichnet, daß die Befestigungsmittel mechanische Befestigungsmittel umfassen.

4. Baumschutz nach Anspruch 1, dadurch gekennzeichnet, daß die Befestigungsmittel verschmolzenes Material des Bogens oder Zuschnitts umfassen.

5. Baumschutz nach Anspruch 1, dadurch gekennzeichnet, daß die Befestigungsmittel eine Reihe von im Abstand angeordneten Zungen und Schlitzen, die ineinandergreifen können, umfassen.

6. Baumschutz nach einem der vorhergehenden Ansprüche, dadurch gekennzeichnet, daß der Bogen oder Zuschnitt geriffeltes Plastmaterial umfaßt und daß die Scharnier- oder Falzlinien einen geglätteten Teil des Bogens oder Zuschnitts umfassen, wo die Rillen abgedichtet sind.

7. Baumschutz nach einem der vorhergehenden Ansprüche, bei dem die Scharnier- oder Falzlinien durch Reibformung gebildet werden.

8. Baumschutz nach einem der vorhergehenden Ansprüche, dadurch gekennzeichnet, daß dieser um die Scharnier- oder Faltlinien zusammengelegt werden kann, um im wesentlichen flach zu sein.

## Revendications

1. Abri pour arbre (1), comprenant une zone de croissance (2) et une poche (3) pour recevoir un élément de support allongé, l'abri étant formé à partir d'une feuille pratiquement plate ou d'un flan de matériau (4) et comportant des lignes d'articulation ou de pliage espacées (5) autour desquelles la feuille ou le flan peuvent être pliés pour former des panneaux (6) définissant la zone de croissance (2) et la poche (3), caractérisé en ce qu'un bord du flan est fixé par des moyens de fixation à une surface interne d'un panneau, un bord du flan opposé étant fixé par des moyens de fixation à une surface externe d'un deuxième panneau, de sorte que les deux panneaux se chevauchent et sont espacés pour définir la poche.

2. Abri pour arbre selon la revendication 1, caractérisé en ce que les moyens de fixation comprennent un adhésif.

3. Abri pour arbre selon la revendication 1, caractérisé en ce que les moyens de fixation comprennent un moyen de fixation mécanique.

4. Abri pour arbre selon la revendication 1, caractérisé en ce que les moyens de fixation comprennent un matériau fondu de la feuille ou du flan.

5. Abri pour arbre selon la revendication 1, caractérisé en ce que les moyens de fixation comprennent une série de languettes et de fentes espacées pouvant s'engager les unes dans les autres.

6. Abri pour arbre selon l'une quelconque des revendications précédentes, caractérisé en ce que la feuille ou le flan comprennent une matière plastique cannelée, les lignes d'articulation ou de pliage comprenant une partie aplatie de la feuille ou du flan où les cannelures sont scellées.

7. Abri pour arbre selon l'une quelconque des revendications précédentes, les lignes d'articulation ou de pliage étant formées par formage par friction.

8. Abri pour arbre selon l'une quelconque des revendications précédentes, caractérisé en ce qu'il peut être replié autour des lignes d'articulation ou de pli pour être pratiquement plat.
